# FASCICULE DE BREVET EUROPEEN

(11) **EP 3 811 506 B1**
(45) Date de publication et mention de la délivrance du brevet: **09.10.2024**
(21) Numéro de dépôt: 19742880.8
(22) Date de dépôt: 25.06.2019
(51) Int. Cl.: H02K 55/00, H02K 1/18

(54) **MACHINE TOURNANTE SUPRACONDUCTRICE**
SUPRALEITENDE ROTIERENDE MASCHINE
SUPERCONDUCTING ROTATING MACHINE

(30) Priorité: 25.06.2018 FR 1855630
(43) Date de publication de la demande: 28.04.2021
(73) Titulaire: Absolut System, 38320 Eybens (FR)
(72) Inventeur: TANCHON, Julien, 38180 SEYSSINS (FR); RENAUD, Pierre, 38000 GRENOBLE (FR); CIPRIANI, Adrien, 38170 SEYSSINET PARISET (FR)
(74) Mandataire: Regimbeau
(86) Numéro de dépôt international: PCT/FR2019/051549
(87) Numéro de publication internationale: WO 2020/002817

(56) Documents cités:
- WO-A1-2016/024214
- JP-A- 2004 023 921
- JP-A- 2005 204 492
- JP-A- 2006 173 639
- JP-A- H01 274 659
- US-A- 3 742 265

## Description

### DOMAINE DE L'INVENTION

La présente invention concerne une machine tournante supraconductrice comprenant un rotor supportant un élément supraconducteur, tel qu'une bobine ou un insert magnétique, et un cryostat entourant le rotor pour maintenir ledit élément supraconducteur à une température cryogénique. Ladite machine tournante peut être un moteur ou un générateur.

### ETAT DE LA TECHNIQUE

Les machines tournantes supraconductrices présentent l'avantage de procurer un champ magnétique plus élevé tout en permettant de réduire la taille des composants.

Une machine tournante supraconductrice peut comprendre un élément supraconducteur, tel qu'une bobine ou un insert magnétique, fixé sur un rotor, et une bobine formée d'un enroulement d'un fil électriquement conducteur ou un insert magnétique, sur un stator.

La supraconductivité se manifestant à une température très basse, il est nécessaire de refroidir l'élément supraconducteur à une température proche de 0 K, par exemple comprise entre 20 et 80K.

A cet effet, il est connu d'entourer le rotor d'un cryostat qui est solidaire du rotor et qui tourne donc avec celui-ci par rapport au stator. Le cryostat comprend une enceinte étanche adaptée pour recevoir un fluide cryogénique.

Les documents US 3,742,265, US 3,904,901, US 4,001,617 et US 4,176,291 décrivent des moteurs supraconducteurs pourvus d'un tel cryostat rotatif.

Cependant, le champ magnétique diminue fortement avec la distance par rapport à la bobine supraconductrice.

Pour augmenter l'efficacité de la machine tournante supraconductrice, on cherche donc à minimiser ladite distance.

Le document JP décrit une machine tournante selon le préambule de la revendication 1.

Les documents WO 2016/024214, JP H01-274659, JP 2005-204492, JP 2006-173639 A et JP 2004-023921 décrivent des machines tournantes dans lesquelles au moins un élément supraconducteur est agencé sur le stator.

### EXPOSE DE L'INVENTION

Un but de l'invention est d'augmenter l'efficacité d'une machine tournante supraconductrice en diminuant la distance entre l'élément supraconducteur et le stator.

A cet effet, l'invention est définie par la revendication 1 et concerne une machine tournante supraconductrice comprenant :
- un stator comprenant au moins une bobine électromagnétique ou un insert magnétique, le stator ne comprenant aucun élément supraconducteur,
- un rotor mobile en rotation par rapport au stator, supportant un élément supraconducteur agencé en regard de la bobine ou de l'insert du stator,
- un cryostat entourant le rotor pour maintenir l'élément supraconducteur à une température cryogénique,
ladite machine étant caractérisée en ce que le cryostat est fixe par rapport au stator.

Par « température cryogénique » on entend dans le présent texte une température inférieure ou égale à 120 K.

En procurant un cryostat fixe autour du rotor, l'invention permet d'agencer la bobine ou l'aimant du stator au contact d'une surface extérieure du cryostat, voire à l'intérieur du cryostat, ce qui permet de minimiser la distance entre le rotor et le stator.

Selon un mode de réalisation, la bobine ou l'insert du stator est agencé(e) contre la surface extérieure du cryostat.

Selon un autre mode de réalisation, la bobine ou l'insert du stator est agencé(e) à l'intérieur du cryostat.

Selon un mode de réalisation, le cryostat comprend une enceinte en un matériau non conducteur électrique.

Ladite enceinte peut ainsi comprendre un matériau céramique ou composite.

Selon un mode de réalisation, le cryostat comprend une enceinte métallique.

Selon l'invention, l'enceinte du cryostat comprend deux coques s'étendant radialement par rapport à l'axe de rotation du rotor et assemblées selon une surface parallèle à l'axe de rotation du rotor, lesdites coques étant maintenues en contact étanche par la pression externe au cryostat lorsque le cryostat est en dépression.

Le rotor est avantageusement monté en rotation libre dans le cryostat par au moins deux roulements.

Selon un mode de réalisation, le rotor comprend un arbre de sortie découplé en rotation vis-à-vis du cryostat par un joint tournant.

Selon un mode de réalisation, le cryostat comprend une entrée et une sortie d'un fluide caloporteur. Ladite entrée et ladite sortie de fluide caloporteur peuvent être agencées dans un tube solidaire du rotor, ledit tube étant découplé en rotation vis-à-vis du cryostat par au moins un roulement. De manière alternative, ladite entrée et ladite sortie de fluide caloporteur sont agencés dans un tube solidaire du cryostat, ledit tube étant découplé en rotation vis-à-vis du rotor par au moins un roulement.

L'invention concerne également un système comprenant une machine tournante telle que décrite précédemment et un refroidisseur cryogénique auquel sont reliées laquelle l'entrée et la sortie de fluide caloporteur du cryostat.

Selon une autre forme d'exécution, l'invention concerne un système comprenant une machine tournante telle que décrite plus haut et un refroidisseur cryogénique couplé au cryostat, ledit refroidisseur comprenant un doigt réfrigéré s'étendant selon l'axe de rotation du rotor, en contact physique avec l'élément supraconducteur par au moins une tresse thermiquement conductrice.

### DESCRIPTION DES FIGURES

D'autres caractéristiques et avantages de l'invention ressortiront de la description détaillée qui va suivre, en référence aux dessins annexés sur lesquels :
- la figure 1 est une vue en coupe d'un moteur selon un mode de réalisation de l'invention, dans lequel le cryostat est agencé entre la bobine électromagnétique du stator et le rotor,
- la figure 2 est une vue en coupe d'un moteur selon un autre mode de réalisation de l'invention, dans lequel le cryostat entoure à la fois le rotor et la bobine électromagnétique du stator,
- la figure 3 est une vue en coupe d'un détail du cryostat de la figure 2.

Les signes de référence identiques d'une figure à l'autre désignent des éléments identiques ou remplissant la même fonction.

### DESCRIPTION DETAILLEE DE MODES DE REALISATION DE L'INVENTION

La machine tournante supraconductrice comprend un stator et un rotor librement mobile en rotation par rapport au stator. Dans la suite du texte, on prendra comme exemple un moteur, mais il va de soi que la machine tournante peut également être un générateur.

Le rotor supporte au moins un élément supraconducteur, par exemple une bobine supraconductrice adaptée pour être alimentée électriquement par une source de tension alternative ou un ou plusieurs inserts magnétiques.

En regard de l'élément supraconducteur, le stator supporte au moins une bobine électromagnétique ou un insert magnétique, tel qu'un aimant permanent. Contrairement à l'élément supraconducteur du rotor, la bobine du stator est opérationnelle à toute température, notamment la température ambiante. Le stator ne comprend aucun élément supraconducteur.

Le rotor est entouré par un cryostat permettant de maintenir l'élément supraconducteur à une température cryogénique, par exemple à une température comprise entre 20 et 80 K.

Le rotor comprend un arbre de sortie s'étendant selon l'axe de rotation du rotor. Ledit arbre de sortie est adapté pour être couplé à un arbre d'une machine à entraîner en rotation.

De manière connue en elle-même, le rotor est entraîné en rotation par un champ magnétique généré et contrôlé à la fois par le stator et le rotor.

L'invention permet de réduire la distance entre le rotor et le stator en rendant le cryostat fixe par rapport au stator. En effet, la bobine ou l'insert du stator peut être agencé contre la surface extérieure du cryostat, voire à l'intérieur même du cryostat. Grâce à cette réduction de la distance, le champ magnétique auquel est soumis la bobine ou l'insert magnétique du stator est augmenté.

Le cryostat comprend une enceinte étanche à l'intérieur de laquelle on peut faire le vide. Par « vide » on entend dans le présent texte une pression inférieure ou égale à 1 mbar (soit inférieure ou égale à 100 Pa).

Le rotor est monté en rotation libre dans le cryostat, par l'intermédiaire d'au moins deux roulements. De préférence, lesdits roulements sont agencés aussi loin que possible de l'élément supraconducteur, afin de ne pas être affectés par le champ magnétique qu'il produit.

Par ailleurs, l'arbre de sortie est découplé vis-à-vis du cryostat par un joint tournant qui permet la rotation de l'arbre tout en garantissant l'étanchéité du cryostat.

Le cryostat est formé de deux coques qui s'étendent de part et d'autre d'un plan perpendiculaire à l'axe de rotation du rotor. La jonction entre les deux coques s'effectue le long d'une surface parallèle à l'axe de rotation du rotor. Un joint torique est agencé entre les deux coques pour assurer l'étanchéité de la jonction. Lorsque le cryostat est mis sous vide, la coque située du côté extérieur par rapport à ladite surface est naturellement maintenue plaquée contre la coque située du côté intérieur par la pression extérieure au moteur. Ainsi, le cryostat sous vide peut être maintenu fermé par la seule pression atmosphérique, sans qu'il soit nécessaire d'utiliser une bride ou tout autre moyen de fixation des deux coques entre elles.

Selon un mode de réalisation, le cryostat comprend un circuit de circulation d'un fluide caloporteur monophasique ou diphasique, par exemple de l'azote, de l'hélium et/ou du néon. Le cryostat comprend ainsi une entrée et une sortie de fluide caloporteur en liaison fluidique avec un réservoir de fluide caloporteur ou avec un refroidisseur cryogénique. Lesdites entrée et sortie s'étendent selon l'axe de rotation du rotor. Ledit circuit peut être agencé dans un tube solidaire du rotor et par conséquent tourner avec celui-ci ; dans ce cas, le moteur comprend un découplage par roulements entre le cryostat et le tube. De manière alternative, ledit circuit de fluide caloporteur est agencé dans un tube solidaire du cryostat, de manière étanche par rapport à celui-ci ; dans ce cas, le moteur comprend un découplage par roulements entre le tube et le rotor.

Selon un autre mode de réalisation, le cryostat est couplé à un refroidisseur cryogénique comprenant un doigt réfrigéré en contact physique avec les pièces à refroidir par l'intermédiaire de tresses thermiques ayant une très bonne conductivité thermique. Ce mode de réalisation permet de s'affranchir de la circulation d'un fluide caloporteur.

Le cryostat peut être formé en tout ou partie d'un métal, tel que de l'inox ou du titane.

De manière alternative, le cryostat peut comprendre un matériau non conducteur de l'électricité, tel qu'une céramique ou un matériau composite. La céramique est particulièrement avantageuse pour sa bonne conductivité thermique et électrique et sa caractéristique amagnétique.

Outre le gain en termes de distance entre l'élément supraconducteur et le stator, la conception de la machine tournante est simplifiée du fait de l'immobilité du cryostat. La durée de vie de la machine est ainsi allongée. En particulier, l'intégration d'un refroidisseur cryogénique est facilitée par rapport au cas d'un cryostat rotatif.

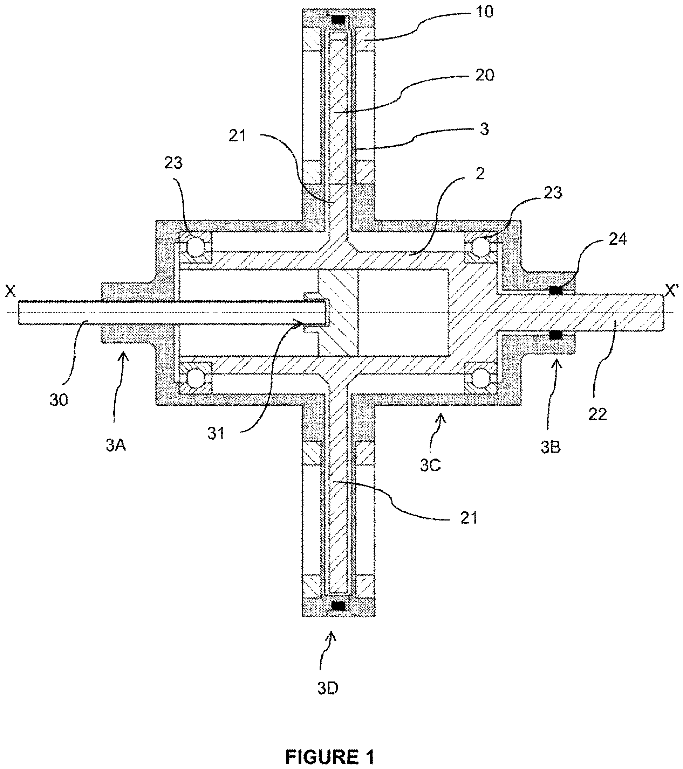

Selon un premier mode de réalisation, illustré à la figure 1, le cryostat entoure le rotor et est ainsi interposé entre le rotor et le stator.

Le rotor est désigné par le repère 2. Le rotor est mobile en rotation selon un axe XX' par rapport au stator (non représenté). Le stator comprend au moins une bobine 10 ou un aimant permanent.

Le rotor présente une portion axiale qui se termine par un arbre de sortie 22. Le rotor comprend en outre une ou plusieurs ailes 21 s'étendant radialement à partir d'une portion axiale. Au moins une bobine supraconductrice 20 est agencée sur une aile respective. De manière alternative (non représentée), un ou des inserts magnétiques supraconducteurs pourraient être agencés sur une ou des ailes du rotor.

La bobine supraconductrice 20 est agencée en regard de la bobine 10 du stator.

Le cryostat 3 entoure le rotor 2. Le cryostat présente une enceinte comprenant, le long de l'axe X-X', deux portions d'extrémité 3A, 3B et une portion centrale 3C plus large que les portions d'extrémité.

Une première portion d'extrémité 3A comprend un passage pour un tube 30 permettant l'entrée et la sortie d'un fluide caloporteur dans le cryostat (l'architecture du circuit de fluide caloporteur n'est pas représentée dans le détail). Le tube 30 s'étend selon l'axe XX' et est en liaison fluidique avec un réservoir de fluide caloporteur (non représenté) Le tube 30 est solidaire du cryostat et assemblé de manière étanche à celui-ci ; il est découplé du rotor par un roulement (non représenté) agencé à l'interface 31 entre le rotor et le tube 30. De manière alternative, le tube 30 pourrait être solidaire du rotor ; dans ce cas, il faudrait prévoir un joint tournant à l'interface entre la portion d'extrémité 3A du cryostat et le tube 30.

Une seconde portion d'extrémité 3B, opposée à la première le long de l'axe XX', comprend un passage pour l'arbre de sortie 22 du rotor. L'étanchéité entre l'arbre de sortie 22 et la portion 3B du cryostat est assurée par un joint tournant 24.

La portion centrale 3C du cryostat comprend un logement pour la portion axiale du rotor, le rotor étant monté libre en rotation dans la portion centrale 3C du cryostat par deux roulements 23. Les roulements 23 sont avantageusement placés au voisinage des deux extrémités de la portion centrale 3C, de part et d'autre des ailes radiales 21 du rotor, pour maximiser la distance vis-à-vis du champ magnétique généré par la bobine supraconductrice. Le cryostat comprend une extension radiale 3D qui s'étend à partir de la portion centrale 3C (sensiblement au niveau du milieu de ladite portion centrale 3C) en entourant les ailes 21 du rotor. Un faible entrefer est maintenu entre la surface intérieure de l'extension radiale du cryostat et la surface extérieure des ailes 21 du rotor pour permettre le passage du fluide caloporteur afin d'assurer un refroidissement efficace de la bobine supraconductrice. A titre purement indicatif, la largeur dudit entrefer peut être de l'ordre de 0,2 mm.

Par ailleurs, le cryostat peut inclure un logement pour la bobine 10, ladite bobine pouvant ainsi être en contact avec la surface extérieure de l'extension radiale 3D du cryostat, qui est fixe.

L'épaisseur du cryostat dans l'extension radiale 3D est relativement plus fine que celle du reste du cryostat, par exemple de l'ordre de 1 mm.

Ainsi, la distance entre la bobine supraconductrice 20 et la bobine 10 est égale à la somme de la largeur de l'entrefer et de l'épaisseur du cryostat. Cette distance peut être par exemple de l'ordre de 1,2 mm. Cela représente une réduction de l'ordre de 80% par rapport à un moteur supraconducteur de l'état de la technique où le cryostat tourne avec le rotor.

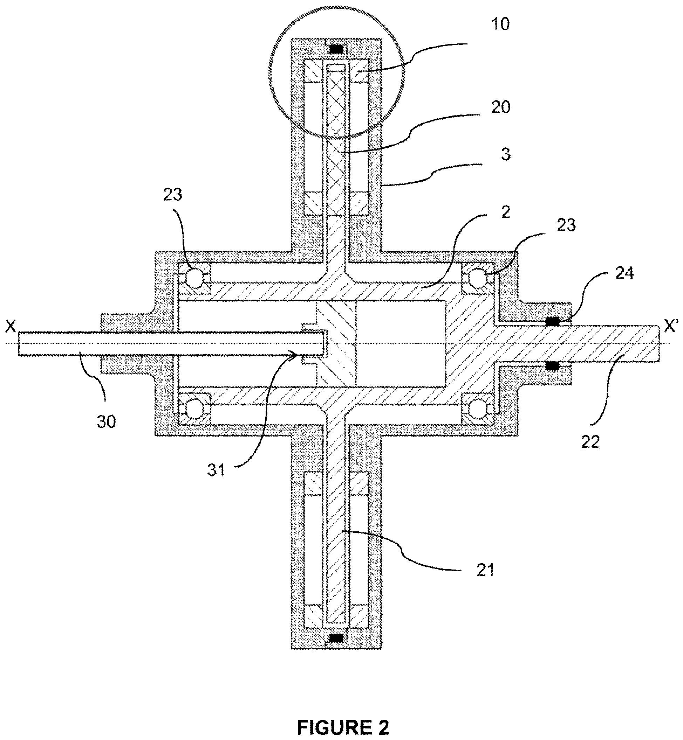

Selon un second mode de réalisation, illustré à la figure 2, le cryostat 3 entoure non seulement le rotor 2 mais aussi la bobine 10 ou l'insert magnétique agencé sur le stator.

Les autres éléments du moteur étant identiques à celui de la figure 1, ils ne seront pas décrits à nouveau.

Dans ce mode de réalisation, la distance entre la bobine supraconductrice et le stator peut être encore minimisée par rapport au mode de réalisation de la figure 1, puisque la paroi du cryostat n'est pas interposée entre le rotor et le stator.

A titre purement indicatif, on peut ainsi parvenir à une distance entre le rotor et le stator de l'ordre de 0,2 mm.

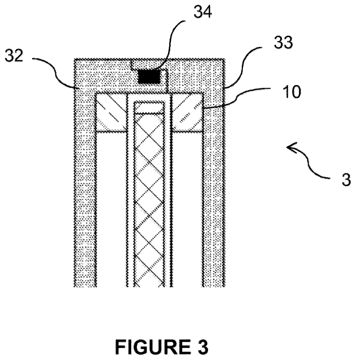

La figure 3 est une vue de détail du cryostat, représentant la zone entourée sur la figure 2. Le cryostat 3 est formé de deux coques 32, 33 qui s'étendent de part et d'autre d'un plan perpendiculaire à l'axe XX'. La jonction entre les deux coques s'effectue le long d'une surface parallèle à l'axe XX' s'étendant entre deux surfaces radiales. Un joint torique 34 est agencé entre les deux coques pour assurer l'étanchéité de la jonction au niveau de la surface axiale. Lorsque le cryostat est mis sous vide, la coque 33 située du côté extérieur par rapport à ladite surface est naturellement maintenue plaquée contre la coque 32 située du côté intérieur, par la pression atmosphérique externe qui exerce un effort radial orienté vers l'intérieur. Ainsi, le cryostat est maintenu fermé par la seule pression atmosphérique dès qu'il est sous vide, et ne nécessite aucun autre moyen de fixation des coques 32, 33.

Naturellement, les moteurs illustrés représentent seulement des formes d'exécution particulières mais en aucun cas limitatives de l'invention.

### REFERENCES

US 3,742,265
US 3,904,901
US 4,001,617
US 4,176,291

## Revendications

1. Machine tournante supraconductrice comprenant :
- un stator comprenant au moins une bobine (10) électromagnétique ou un aimant permanent, le stator ne comprenant aucun élément supraconducteur,
- un rotor (2) mobile en rotation par rapport au stator, supportant un élément supraconducteur (20) agencé en regard de la bobine ou de l'aimant permanent du stator, **caractérisée par**
- un cryostat (3) fixe par rapport au stator, comprenant une enceinte étanche sous vide contenant le rotor (2) pour maintenir l'élément supraconducteur (20) à une température cryogénique, ladite enceinte comprenant deux coques (32, 33) s'étendant radialement par rapport à l'axe de rotation (XX') du rotor et assemblées selon une surface parallèle à l'axe (XX') de rotation du rotor, lesdites coques étant maintenues en contact étanche par la pression externe au cryostat lorsque le cryostat est en dépression.

2. Machine tournante selon la revendication 1, dans laquelle la bobine (10) ou l'aimant permanent du stator est agencé(e) contre la surface extérieure du cryostat (3).

3. Machine tournante selon la revendication 1, dans laquelle la bobine (10) ou l'aimant permanent du stator est agencé(e) à l'intérieur du cryostat (3).

4. Machine tournante selon l'une des revendications 1 à 3, dans laquelle l'enceinte du cryostat (3) comprend un matériau non conducteur électrique.

5. Machine tournante selon la revendication 4, dans laquelle l'enceinte comprend un matériau céramique ou composite.

6. Machine tournante selon l'une des revendications 1 à 3, dans laquelle l'enceinte du cryostat (3) comprend un matériau métallique.

7. Machine tournante selon l'une des revendications 1 à 6, dans laquelle le rotor (2) est monté en rotation libre dans le cryostat (3) par au moins deux roulements (23).

8. Machine tournante selon l'une des revendications 1 à 7, dans laquelle le rotor (2) comprend un arbre de sortie (22) découplé en rotation vis-à-vis du cryostat (3) par un joint tournant (24).

9. Machine tournante selon l'une des revendications 1 à 8, dans laquelle le cryostat (3) comprend une entrée et une sortie d'un fluide caloporteur agencées dans un tube (30) solidaire du rotor (2), ledit tube (30) étant découplé en rotation vis-à-vis du cryostat (3) par au moins un roulement.

10. Machine tournante selon l'une des revendications 1 à 8, dans laquelle le cryostat (3) comprend une entrée et une sortie d'un fluide caloporteur agencées dans un tube (30) solidaire du cryostat (2), ledit tube (30) étant découplé en rotation vis-à-vis du rotor (2) par au moins un roulement.

11. Système comprenant une machine tournante selon l'une des revendications 9 ou 10 et un refroidisseur cryogénique auquel sont reliées l'entrée et la sortie de fluide caloporteur du cryostat.

12. Système comprenant une machine tournante selon l'une des revendications 1 à 8 et un refroidisseur cryogénique couplé au cryostat, ledit refroidisseur comprenant un doigt réfrigéré s'étendant selon l'axe de rotation du rotor, en contact physique avec l'élément supraconducteur par au moins une tresse thermiquement conductrice.

## Patentansprüche

1. Supraleitende drehende Maschine, umfassend:
- einen Stator, der mindestens eine elektromagnetische Spule (10) oder einen Permanentmagneten umfasst, wobei der Stator kein supraleitendes Element umfasst,
- einen Rotor (2), der in Bezug auf den Stator drehbeweglich ist, der ein der Spule oder dem Permanentmagneten des Stators zugewandt angeordnetes supraleitendes Element (20) trägt, **gekennzeichnet durch**
- einen im Verhältnis zum Stator feststehenden Kryostat (3), umfassend ein vakuumdichtes Gehäuse, das den Rotor (2) enthält, um das supraleitende Element (20) auf einer kryogenen Temperatur zu halten, wobei das Gehäuse zwei Schalen (32, 33) umfasst, die sich radial zur Drehachse (XX') des Rotors erstrecken und entlang einer Fläche parallel zur Drehachse (XX') des Rotors zusammengefügt sind, wobei die Schalen durch den Druck außerhalb des Kryostats in dichtem Kontakt gehalten werden, wenn der Kryostat in Unterdruck ist.

2. Drehende Maschine nach Anspruch 1, wobei die Spule (10) oder der Permanentmagnet des Stators an der Außenfläche des Kryostats (3) eingerichtet ist.

3. Drehende Maschine nach Anspruch 1, wobei die Spule (10) oder der Permanentmagnet des Stators im Inneren des Kryostats (3) eingerichtet ist.

4. Drehende Maschine nach einem der Ansprüche 1 bis 3, wobei das Gehäuse des Kryostats (3) ein nicht elektrisch leitendes Material umfasst.

5. Drehende Maschine nach Anspruch 4, wobei das Gehäuse ein Keramik- oder Verbundmaterial umfasst.

6. Drehende Maschine nach einem der Ansprüche 1 bis 3, wobei das Gehäuse des Kryostats (3) ein metallisches Material umfasst.

7. Drehende Maschine nach einem der Ansprüche 1 bis 6, wobei der Rotor (2) durch mindestens zwei Lager (23) frei drehend im Kryostat (3) angebracht ist.

8. Drehende Maschine nach einem der Ansprüche 1 bis 7, wobei der Rotor (2) eine Abtriebswelle (22) umfasst, die durch eine Drehverbindung (24) vom Kryostat (3) rotatorisch entkoppelt ist.

9. Drehende Maschine nach einem der Ansprüche 1 bis 8, wobei der Kryostat (3) einen Eingang und einen Ausgang eines Wärmeträgermediums umfasst, die in einem Rohr (30) eingerichtet sind, das fest mit dem Rotor (2) verbunden ist, wobei das Rohr (30) durch wenigstens ein Lager vom Kryostat (3) rotatorisch entkoppelt ist.

10. Drehende Maschine nach einem der Ansprüche 1 bis 8, wobei der Kryostat (3) einen Eingang und einen Ausgang eines Wärmeträgermediums umfasst, die in einem Rohr (30) eingerichtet sind, das fest mit dem Kryostat (2) verbunden ist, wobei das Rohr (30) durch wenigstens ein Lager vom Rotor (2) rotatorisch entkoppelt ist.

11. System, das eine drehende Maschine nach einem der Ansprüche 9 oder 10 und eine kryogene Kühlvorrichtung umfasst, mit der der Eingang und der Ausgang des Wärmeträgermediums des Kryostats verbunden sind.

12. System, das eine drehende Maschine nach einem der Ansprüche 1 bis 8 und eine mit dem Kryostat gekoppelte kryogene Kühlvorrichtung umfasst, wobei die Kühlvorrichtung einen gekühlten Finger umfasst, der sich entlang der Drehachse des Rotors in physischem Kontakt mit dem supraleitenden Element durch wenigstens ein thermisch leitendes Geflecht erstreckt.

## Claims

1. Superconducting rotating machine comprising :
- a stator comprising at least one electromagnetic coil (10) or a permanent magnet, the stator not comprising any superconducting elements,
- a rotor (2) rotatable relative to the stator, supporting a superconducting element (20) arranged opposite the coil or the permanent magnet of the stator,
**characterized by**
- a cryostat (3) fixed with respect to the stator, comprising a vacuum-tight enclosure containing the rotor (2) for maintaining the superconducting element (20) at a cryogenic temperature, said enclosure comprising two shells (32, 33) extending radially with respect to the axis of rotation (XX') of the rotor and joined together along a surface parallel to the axis (XX') of rotation of the rotor, said shells being maintained in sealed contact by the pressure external to the cryostat when the cryostat is under vacuum.

2. Rotating machine according to claim 1, wherein the coil (10) or permanent magnet of the stator is arranged against the outer surface of the cryostat (3).

3. Rotating machine according to claim 1, wherein the coil (10) or the permanent magnet of the stator is arranged inside the cryostat (3).

4. Rotating machine according to one of claims 1 to 3, in which the cryostat enclosure (3) comprises an electrically non-conductive material.

5. Rotating machine according to claim 4, wherein the enclosure comprises a ceramic or composite material.

6. Rotating machine according to one of claims 1 to 3, wherein the cryostat enclosure (3) comprises a metallic material.

7. Rotating machine according to one of claims 1 to 6, wherein the rotor (2) is freely rotatably mounted in the cryostat (3) by at least two bearings (23).

8. Rotating machine according to one of claims 1 to 7, wherein the rotor (2) comprises an output shaft (22) rotationally decoupled from the cryostat (3) by a rotary joint (24).

9. Rotating machine according to one of claims 1 to 8, in which the cryostat (3) comprises a heat-transfer fluid inlet and outlet arranged in a tube (30) integral with the rotor (2), said tube (30) being rotationally decoupled from the cryostat (3) by at least one bearing.

10. Rotating machine according to one of claims 1 to 8, in which the cryostat (3) comprises a heat-transfer fluid inlet and outlet arranged in a tube (30) integral with the cryostat (2), said tube (30) being rotationally decoupled from the rotor (2) by at least one bearing.

11. System comprising a rotating machine according to one of claims 9 or 10 and a cryogenic cooler to which the heat-transfer fluid inlet and outlet of the cryostat are connected.

12. System comprising a rotating machine according to one of claims 1 to 8 and a cryogenic cooler coupled to the cryostat, said cooler comprising a refrigerated finger extending along the axis of rotation of the rotor, in physical contact with the superconducting element by at least one thermally conductive braid.
